# EUROPÄISCHE PATENTSCHRIFT

(11) **EP 2 229 294 B1**
(45) Veröffentlichungstag und Bekanntmachung des Hinweises auf die Patenterteilung: **26.02.2014**
(21) Anmeldenummer: 08868186.1
(22) Anmeldetag: 19.11.2008
(51) Int. Cl.: B60R 21/01, B60R 21/017, H04L 12/413

(54) **STEUERGERÄT UND VERFAHREN ZUR ANSTEUERUNG VON PERSONENSCHUTZMITTELN, SOWIE SENSOR ZUR AUSGABE VON EINEM UNFALLRELEVANTEN SIGNAL**
CONTROL UNIT AND METHOD FOR CONTROLLING PERSONAL PROTECTIVE MEANS, AND SENSOR FOR THE OUTPUT OF AN ACCIDENT-RELATED SIGNAL
APPAREIL DE COMMANDE ET PROCÉDÉ DE COMMANDE DE MOYENS DE PROTECTION DE PERSONNES, ET CAPTEUR DESTINÉ À ÉMETTRE UN SIGNAL DE DÉFAILLANCE

(30) Priorität: 03.01.2008 DE 102008003082
(43) Veröffentlichungstag der Anmeldung: 22.09.2010
(73) Patentinhaber: Robert Bosch GmbH, 70442 Stuttgart (DE)
(72) Erfinder: SCHUMACHER, Hartmut, 71691 Freiberg (DE)
(86) Internationale Anmeldenummer: PCT/EP2008/065780
(87) Internationale Veröffentlichungsnummer: WO 2009/083334

(56) Entgegenhaltungen:
- EP-A- 0 318 354
- US-A- 5 620 202
- US-A- 5 748 675
- US-A1- 2005 109 935

## Beschreibung

### Stand der Technik

Die Erfindung betrifft ein Steuergerät bzw. ein Verfahren zur Ansteuerung von Personenschutzmitteln sowie ein Sensor zur Ausgabe von einem unfallrelevanten Signal nach der Gattung der unabhängigen Patentansprüche.

Aus DE 102 50 920 A1 ist es bereits bekannt, dass bei Datenübertragungen bei Insassenschutzsystemen durch Pulsweitenmodulationen solch schmale Pulse, entstehen, so dass Probleme hinsichtlich der elektromagnetischen Verträglichkeit auftreten können.

Die US 5,620,202 offenbart eine Schnittstelle zwischen einem Einschlagsensor und einem Controller für ein ergänzendes aufblasbares Rückhaltesystem gemäß dem Oberbegriff des Anspruchs 1.

### Offenbarung der Erfindung

Das erfindungsgemäße Steuergerät bzw. das erfindungsgemäße Verfahren bzw. der erfindungsgemäße Sensor mit den Merkmalen der unabhängigen Patentansprüche haben demgegenüber den Vorteil, dass durch die Beeinflussung von Signalflanken des zu übertragenden digitalen Signals mittels einer Mehrzahl von Stromquellen, die in einer Schnittstelle angeordnet sind, ein effektiver Beitrag zur elektromagnetischen Verträglichkeit (EMV) geleistet wird. Durch die Beeinflussung von Signalflanken ist eine Gestaltung dieser Signalflanken im Sinne einer optimalen EMV möglich. Insbesondere ist erfindungsgemäß möglich, entsprechende EMV-Normen leichter und kostengünstiger zu erfüllen. Vor allem kann erfindungsgemäß das Potenzial moderner ASIC's mit den beispielsweise ein Systembaustein im Airbagsteuergerät bereitgestellt wird, bezüglich digitaler Möglichkeiten voll ausgenutzt wird. Damit ist ein sogenanntes EMV gerechtes Slope-shaping durch ein geeignetes Slope-control möglich. Eine geringere Toleranz ist gegeben, die Einhaltung von Normen wird ermöglicht und man ist insgesamt kostengünstiger und flexibler.

Die Erfindung lässt sich daher insbesondere in solchen System-ASIC's anwenden und erfordert dann keine zusätzlichen externen Bauelementen. Unter solchen System-ASIC's sind hierbei Bausteine zu verstehen, die mehr als nur eine reine Datenübertragung als Transceiver Funktion beinhalten, d. h. sie besitzen den Transceiver als einen von mehreren Schaltungsblöcken, z. B. weisen System-ASIC's bei Personenschutzsystemen LIN-Transceiver als die Schaltungsblöcke zur Anbindung von peripheren Sensoren beziehungsweise Sensor-Steuergeräten über Punkt-zu-Punkt-Verbindungen oder Bussysteme auf.

Die Erfindung kann ebenso in System-ASICs externer Sensoren von Personenschutzsystemen, die den Schaltungsblock Stromschnittstelle zur Anbindung an Punkt-zu-Punkt-Verbindungen, Quasi-Busse oder Busse beinhalten, angewendet werden.

Die Erfindung erlaubt ein qualitativ besseres Slope-shaping. Das Slope-shaping lässt sich besser an die vorgegebenen Schnittstellen und/oder Buslasten anpassen. Die Exemplar- und Temperaturstreuung des Slope-shapings fällt deutlich besser aus als beispielsweise in analogen Schaltungen.

Durch solch ein erfindungsgemäßes Slope-shaping können höhere Datenraten ohne zusätzliche Schirmmaßnahme erreicht werden, wie sie beispielsweise durch Unterdrückung unnötig hoher Frequenzanteile in den Übertragungsflanken unter Verbesserung der Symmetrie von steigender und fallender Signalflanke realisiert werden.

Die Einflussnahme durch die Stromquellen auf die Signalflanken ist in einem vorgegebenen Zeitbereich, je nachdem welche Anstiegs- oder Abfallzeiten angestrebt werden, gegeben. Auf die beiden logischen Pegel nehmen die Stromquellen allenfalls als Gleichanteil Einfluss.

Unter einem Steuergerät ist vorliegend ein elektrisches Gerät zu verstehen, das Sensorsignale verarbeitet, in Abhängigkeit davon, Ansteuersignale für Personenschutzmittel abgibt. Personenschutzmittel sind Airbags, Gurtstraffer, crashaktive Kopfstützen, aber auch Fußgängerschutzmittel sowie aktive Personenschutzmittel, wie Bremsen und/oder eine Fahrdynamikregelung. Das Ansteuern bedeutet vorliegend das Aktivieren solcher Personenschutzmittel.

Die wenigstens eine Schnittstelle ist vorzugsweise Teil eines System-ASIC's, also eines integrierten Schaltkreises. Es ist jedoch möglich die wenigsten eine Schnittstelle als einen eigenen integrierten Schaltkreis oder zusätzlich unter Zuhilfenahme von diskreten Bauelementen aufzubauen. Auch eine softwaremäßige Realisierung ist möglich.

Das digitale Datensignal kann ein oder mehrere Einzelsignale repräsentieren. Die digitale Modulation ist vorzugsweise eine Amplitudenmodulation, aber auch andere Modulationstechniken wie Pulsweitenmodulation usw. sind vorliegend möglich.

Die Stromquellen können durch alle möglichen Schaltungsmaßnahmen hergestellt werden. Auch softwaremäßig kann zumindest ein Teil einer solchen Stromquelle realisiert sein. Die Stromquellen können insbesondere als klassische Stromsenken ausgebildet sein. Insbesondere kann für die Stromquellen ein Referenzstrom, der auch über eine Strombank vervielfacht werden kann, verwendet werden.

Die Signalflanken sind die sprunghaften Veränderungen des Signals, um zwischen den Werten zu wechseln, die logisch 0 und logisch 1 repräsentieren.

Bei dem erfindungsgemäßen Sensor handelt es sich um einen solchen Sensor der unfallrelevante Signale ausgibt, dass sind beispielsweise Aufprallsignale, aber auch Umfeldsignale, oder auch Signale bezüglich des Fahrzeuginsassen oder andere Sensorsignale, die bezüglich der Ansteuerung von Personenschutzmitteln von Nutzen sein können.

Durch die in den abhängigen Ansprüchen aufgeführten Maßnahmen und Weiterbildungen sind vorteilhafte Verbesserungen des in den unabhängigen Patentansprüchen angegebenen Steuergeräts zur Ansteuerung von Personenschutzmitteln bzw. eines entsprechenden Verfahrens bzw. eines entsprechenden Sensors möglich.

Es ist vorteilhaft, dass für die Mehrzahl der Stromquellen eine Ansteuerung vorgesehen ist, die die Stromquellen zu den vorgegebenen Zeitpunkten digital zur Beeinflussung der Signalflanken schaltet, wobei ein erster Takt für das Schalten größer als der Datentakt ist. Gemäß dieser bevorzugten Ausführungsform werden die Stromquellen in Abhängigkeit von einem Ansteuersignal üblicherweise unmittelbar durch ein Decoderwort geschaltet, um einen entsprechenden Gesamtstrom zu erzielen. Dieser Gesamtstrom wird dem digitalen Signal überlagert, wobei die Schaltung der Stromquellen mit einem solchen Takt durchgeführt wird, der sehr viel größer als der Datentakt ist, so dass die Flanke des Datensignals dadurch in einem kleinen Zeitbereich präzise verändert und gestaltet werden kann.

Die Ansteuerung ist vorliegend, beispielsweise ein Decoder oder ein anderer Schaltungsteil, der in der Lage ist Signale zu verarbeiten, in Abhängigkeit davon, andere Signale zur Steuerung auszugeben.

Es ist weiterhin vorteilhaft, dass die Schnittstelle einer Erkennungsschaltung zum Erkennen der Ausgabe des digitalen Signals aufweist und weiterhin einen Zähler, der in Abhängigkeit von einem Erkennungssignal der Erkennungsschaltung startet und einen Decoder der in Abhängigkeit von einem Zählerstand die Stromquellen jeweils schaltet. Die Schnittstelle erkennt demnach mittels der Erkennungsschaltung, ob die Übertragung von Daten geplant ist. Ist das der Fall, dann wird ein Zähler gestartet, dessen Zählerstand einen Decoder aktiviert, der in Abhängigkeit vom Zählerstand, das Schalten der Stromquellen steuert, beispielsweise mit entsprechenden Decoderworten, die bestimmen, welche Stromquelle nun zum gegebenen Zeitpunkt zu schalten sind oder nicht. Die Erkennungsschaltung ist beispielsweise ein Schaltungsteil, der zur Erkennung von Flanken konfiguriert ist. Der Zähler ist ein beispielsweise ein 6-Bit-Zähler, der in Abhängigkeit vom Erkennungssignal gestartet wird und der Decoder setzt den Zählerstand in Codeworte um, so dass die Stromquellen in Abhängigkeit von diesen Decoderworten geschaltet werden. Es ist möglich, dass die Decoderworte fest verdrahtet sind oder beispielsweise über eine weitere Schnittstelle vom Mikrocontroller des Steuergeräts bestimmt werden. Auch andere Einflussnahmen sind hier möglich, die insbesondere die aktuelle Buslast reflektieren. Da jedoch üblicherweise die Buslast apriori bekannt ist, kann eine solche Festverdrahtung vorgesehen sein. Es kann weiterhin möglich vorgesehen sein, dass ein Signal angelegt wird, das aus verschiedenen fest verdrahteten Kombinationen von Decoderworten ausgewählt wird, wobei das Signal dann optimal der entsprechenden Buslast entspricht.

Es ist weiterhin vorteilhaft, dass die Schnittstelle genau vier Stromquellen aufweist, da sich vier Stromquellen als ausreichend erwiesen haben, um die entsprechende Kontrolle der Flanken durchzuführen. Mit mehr Stromquellen ist eine genauere Gestaltung der Flanken möglich und mit weniger eine ungenauere.

Als vorteilhaft hat es sich erwiesen, dass der Takt mit dem die Stromquellen geschaltet werden 100 Mal größer ist, als der Datentakt. Damit kann die Gestaltung der Flanken sehr genau vorgenommen werden, da viele Punkte in der Flanke durch diesen hohen Takt durch das Schalten der Stromquellen individuell bestimmt werden.

Es ist weiterhin vorteilhaft, dass eine Beeinflussungsschaltung zur Beeinflussung von jeweiligen Stromwerten der jeweiligen Stromquellen vorgesehen ist. Auch diese Beeinflussung kann Teil eines System-ASIC's sein, sie kann alternativ auch zumindest teilweise softwaremäßig ausgeführt sein. Auch eine externe Realisierung außerhalb des System-ASIC's ist dabei möglich. Die Beeinflussung der Stromwerte kann durch individuell für die einzelnen Stromquellen vorgenommen werden oder für einen zentralen Wert, dessen Veränderung zur Veränderung aller Stromquellen bezüglich ihrer Werte führt.

Es ist darüber hinaus vorteilhaft, dass die Schnittstelle wie oben bereits angedeutet, auf einem integrierten Schaltkreis mit weiteren Steuergerätefunktionen angeordnet ist. Dadurch ist ein sogenannter System-ASIC realisiert. Die weiteren Steuergerätefunktionen sind beispielsweise die Zündkreisschaltung mit den elektrisch steuerbaren Leistungsschaltern, ein Safety controller der parallel zum Mikrocontroller die Sensorwerte daraufhin überprüft, ob ein Auslösefall vorliegt oder nicht, und die Energieversorgung bzw. das Energiemanagement für das Steuergerät. Es ist möglich, dass eine Mehrzahl solcher integrierter Schaltkreise in einem Steuergerät angeordnet ist.

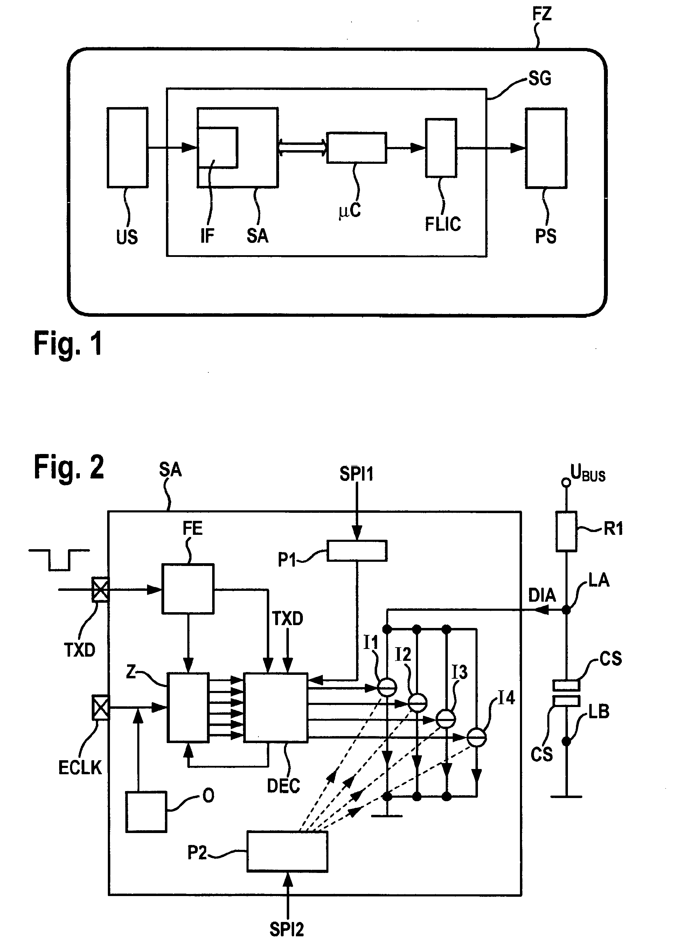

Ausführungsbeispiele der Erfindung sind in der Zeichnung dargestellt und werden in der nachfolgenden Beschreibung näher erläutert.
Es zeigen Figur 1
   ein erfindungsgemäßes Steuergerät mit angeschlossenen Komponenten,
Figur 2
   ein Blockschaltbild der erfindungsgemäßen Schnittstelle,
Figur 3
   eine Empfangsschaltung,
Figur 4
   eine erste Ausführungsform einer erfindungsgemäßen Stromquelle,
Figur 5
   eine zweite Ausführungsform einer erfindungsgemäßen Stromquelle und
Figur 6
   ein Flussdiagramm.

Figur 1 zeigt ein Steuergerät SG der erfindungsgemäßen Art mit angeschlossenen Komponenten im Fahrzeug FZ. Der Einfachheit halber sind hier lediglich die für das Verständnis der Erfindung notwendigen Komponenten dargestellt. Andere Komponenten, die für den Betrieb des Steuergeräts notwendig sind, aber für das Verständnis der Erfindung nicht beitragen, sind der Einfachheit halber weggelassen worden.

Eine Unfallsensorik US ist an das Steuergerät SG und dabei am eine System-ASIC SA angeschlossen. Diese System-ASIC SA weist einen Schnittstellenbereich IF auf, im Folgenden als Schnittstelle bezeichnet, an den die Unfallsensorik angebunden werden kann. Zu dieser Sensorik gehören nicht nur Aufprallsensoren wie Beschleunigungssensoren, und Luftdrucksensoren, und Körperschallsensoren, sondern auch Umfeldsensoren, wie Radar, Ultraschall und/oder Lidarsensoren sowie Insassensensoren, die die Präsenz und gegebenenfalls das Gewicht bzw. Haltung der Insassen repräsentieren. Es ist möglich, dass noch weitere Sensoren vorgesehen sein können, die sich unter dem Begriff Unfallsensoren US subsumieren lassen. Vereinfacht sind hier solche Unfallsensoren außerhalb des Steuergeräts SG angeordnet. Es ist möglich das solche Unfallsensoren auch im Steuergerät SG zumindest teilweise angeordnet sein können. Der System-ASIC SA als integrierter Schaltkreis, weist wie oben angegeben noch weitere Funktionen auf, die jedoch vorliegend eine untergeordnete Rolle spielen und daher hier zunächst übergangen werden. Der Systembaustein SA ist mit dem Mikrocontroller µC verbunden, um den Mikrocontroller µC beispielweise die Signale der Unfallsensoren US mitzuteilen. Der Mikrocontroller µC verarbeitet die Sensorsignale derart, dass damit eine Auslöseentscheidung für die Personenschutzmittel PS getroffen wird. Der Ansteuerbefehl infolge dieser Auslöseentscheidung wird an die Ansteuerschaltung FLIC übertragen. Diese Ansteuerschaltung FLIC kann Teil des System-ASIC's sein. Die Ansteuerschaltung FLIC weist elektrisch steuerbare Leistungsschalter auf, die die Bestromung von Zündelementen eines Airbags oder anderen Aktoren ermöglichen und so zu deren Ansteuerung beitragen. Die Übertragung von Daten, beispielsweise von oder zu den Unfallsensoren US kann mit der Abstrahlung von elektromagnetischer Strahlung verbunden sein, insbesondere bei steilen Flankenübergängen. Erfindungsgemäß werden daher diese Übergänge derart gestaltet, dass die Abstrahlung minimiert wird. Für die Gestaltung dieser Übergänge werden Stromquellen in der Schnittstelle IF verwendet, die im Vergleich zum Datentakt sehr hoch getaktet sind und so eine genaue Gestaltung dieser Flanken, sowohl der fallenden als auch der steigenden Flanke ermöglichen.

Figur 2 zeigt ein Beispiel der erfindungsgemäßen Schnittstelle, wobei auf dem System-ASIC SA lediglich dieser relevante Teil nunmehr dargestellt ist. Auf dem System-ASIC ist eine Flankenerkennungsschaltung FE vorgesehen, die erkennt, dass beispielsweise der ASIC externe Mikrocontroller oder alternativ ein ASIC-Schaltungsblock, vergleichbar einem Mikrocontroller, Daten an weitere Komponenten übertragen will, und zwar die Daten TXD. Diese Daten werden als digitales Signal übertragen. Wird durch die Flankenerkennungsschaltung FE eine fallende Flanke im TXD-Signal erkannt, dann aktiviert dieser einen Zähler Z, vorliegend einen 6-Bit-Zähler. Dieser Zähler wird mit dem Takt ECLK getaktet, vorliegend 2 MHz, was dem Hundertfachen des Datentaktes vorliegend entspricht. Der Takt kann optional mit einem ASIC-Internen Oszillator O erzeugt oder zumindest teilweise erzeugt werden.

Die Flankenerkennungsschaltung FE überträgt einem Decoder DEC, ob eine fallende oder steigende Flanke erkannt wurde. Darüber hinaus überträgt der Zähler Z seinen Zählerstand. Weiterhin wird das zu übertragende Datensignal TXD dem Decoder DEC zugeführt. Der Decoder DEC erzeugt abhängig vom jeweils erreichten Zählerstand neue vordefinierte Decoderworte, beispielsweise kann für 64 Zählerwerte eines 6bit (Nbit)-Zählers für den Zählerstand 0-1 das 4-Bit (<= N Bit) Decoderwort DW1 ausgegeben werden, für den Zählerstand 2-4 das 4-Bit Decoderwort usw. Diese Dcoderworte werden ausgegeben an 4 (<=N) Stromquellen I1, 12, 13 und 14. D. h. der Decoder DEC gibt Stromvektoren aus, die bestimmen, welche der Stromquellen I1, I2, I3 oder 14 geschaltet wird und welche nicht.

Gemäß Figur 2 ist eine Transceiver-Schnittstelle dargestellt, die das erfindungsgemäße Slope-shaping ausführt. Das zu übertragende Signal TXD wird von einem Mikrocontroller µC oder alternativ von anderen Schaltungsblöcken des System-ASIC's SA erzeugt. Aufgabe des in Figur 2 dargestellten Schaltungsteils ist es, die digital vorliegende Information in Form einer seriellen Folge von DatenBits so aufzubereiten, dass diese ohne große Störabstrahlung auf einer Leitung eines Wegbausensors übertragen werden kann. Unter einem Wegbausensor wird beispielsweise ein peripherer Sensor, also ein außerhalb des Steuergeräts vorliegender Sensor verstanden.

Dazu wird erfindungsgemäß das digitale Signal durch Treiberstufe mit den Stromquellen I1 bis 14 so verstärkt, dass der Datenstrom trotz vorhandener Buslast um zu mehrere Meter entfernten Empfänger korrekt übertragen werden kann. Hierzu wäre nur das Signal TXD und eine damit ansteuerbare Treiberstromquelle, beispielsweise eine Stromsenke notwendig. Für ein LIN Interface wären dies beispielsweise 50 mA. Dies führt aber bei einer notwendigen kapazitiven Last des Busses zur Filterung von HF-Einstrahlung zu einer schnelle fallenden Spannungsflanke bestimmt durch die Stromsenke (50mA) und der Gesamtbuskapazität und einer langsameren steigenden Spannungsflanke, die ausschließlich durch Pull-up-Widerstände zumindest einen und der Gesamtkapazität des Busses bestimmt ist. Dadurch ergibt sich eine starke vom Pegel der Busspannung abhängige Unsymmetrie fallender und steigender Signalflanken am Bus. Eine generelle Optimierung der fallenden und steigenden Signalflanken am Bus lässt sich in diesem Beispiel dadurch erreichen, dass der Zeitbereich der Flankenwechsel fallend und steigend gesteuert von TXD, durch einen Hilfstakt in Form des Systemtakts oder Vielfachen davon, bzw. durch einen ASIC-Internen Oszillator genügend zeitliche Auflösung erfährt.

Für ein LIN Interface mit einer Bitdauer von 50 µs kann dies beispielsweise mit einem 2 MHz-Takt erfolgen, für Sensorbusse mit Bitdauern von beispielsweise 8 µs pro Bit mit beispielsweise 12,5 MHz. Für diese Abschätzung liegt die Annahme zugrunde gute Flankenformungsergebnisse zu erreichen, falls die Auflösung zur Formungsveränderung mit einem 100 Mal schnelleren Signal erfolgt.

Das Eingangssignal TXD wird durch die Flankenerkennungsschaltung FE erkannt. Ist diese fallend, wird der N-Bit-Zähler vorliegend der 6-Bit-Zähler Z gestartet, der mit einer geeignet vorhergehend beschriebenen Frequenz getaktet wird. Die primären N-Ausgangsstellen, vorliegend 6 des Zählers Z, werden dem Decoder DEC zugeführt. Der Decoder nimmt zu vordefinierten Zählerzuständen neue Einstellungen über Ansteuersignale zu den Stromquellen vor. Bei den Stromquellen handelt es sich wie gesagt um Stromsenken oder bei Bedarf auch um sogenannte High-Side-Quellen, die durch elektrisch steuerbare Transistoren, vorzugsweise MOS-FETs n- oder p-Kanal-Typen im System-ASIC SA vorhanden sind. Bei einer fallenden Flanke können vom Zählerstand 0 bis zu einem Zählerstand 38 in einem Beispiel mit einem zeitlichen Abstand von jeweils 0,5 µs der Strom von 3,5 mA schrittweise, d. h. alle 0,5 µs bis 19 µs auf 52,5 mA ansteigen. Damit lässt sich mit vier Stromquellen, wobei die erste Stromquelle I1, 3,5 mA, die zweite 12, 7 mA, die dritte I3, I4 mA und die vierte I4, 28 mA aufweisen, die Flanke, vorliegend die fallende Flanke formen. Mit diesem im Zeitbereich der Flanke veränderbaren Diagnosestrom IDIA wird die Flanke (Spannung) geformt. Bis zum Erreichen eines neuen Decoderworts wird der bisherige Ausgangsvektor zur Ansteuerung der Stromquellen gehalten. Um keinen Verzug zwischen ASIC zum Takt ECLK auftretenden Transmit-Daten TXD zu erhalten, kann optional direkt mit TXD = 0 nach fallender Flanke der erste Ausgangsvektor zu den Stromquellen für den Zählerstand 0 ausgegeben werden. Bei einem N-Bit-Zähler können maximal M ≤ 2ⁿ Decoderwörter für die fallende Flanke der Spannung verwendet werden. Im obigen Beispiel werden mit einem 6-Bit-Zähler und einer Auflösung von 0,5 µs 14 Decoderwörter verwendet und damit 14 Diagnosestromänderungen zur Erreichung einer bestimmten fallenden Spannungsflanke vorgenommen. Durch geeignete Wahl der Decoderwörter lassen sich äquidistante Stromänderungen mit nicht äquidistanten Stromänderungen beliebig mischen. Die Anzahl der Stromquellen ist üblicherweise ≥ 1.

Läuft der Zähler auf das Stoppdecoderwort nach vorausgegangener fallender TXD-Flanke auf, veranlasst der Decoder DEC den Zähler Z zum Halt. Diesem Decoderwort entsprechend wird nun der Haltestromvektor an die Stromquellen I1 bis 14 ausgegeben, beispielsweise 52,5 mA, wie oben angegeben. Diese Haltestromvektor wird solang beibehalten, bis es zur steigenden Flanke im Datenbit TXD kommt.

Erkennt die Flankenerkennungsschaltung FE eine steigende Flanke, so wird der Zähler Z zurückgesetzt durch ein Reset und ein Zählerstart ausgelöst, so dass ein neuer Stromvektor an die Stromquellen durch den Decoder DEC ausgegeben wird. Der weitere Verlauf der steigenden Spannungsflanke am Ausgang DIA wird durch Vorgabe geeigneter vordefinierter Stromvektoren, wie bei der fallenden Flanke beeinflusst (die Vordefinition der Stromvektoren zur Formung der steigenden Flanken ist in der Regel verschieden von derer zur Formung der fallenden Flanke). Die Definition der geeigneten Stromvektoren und zeitliche Positionierung erfolgt basierend auf den physikalischen Buslasten, beispielweise dem Bus-Pull-Up-Widerstands oder Pull-up-Widerständen bzw. der gesamten Buskapazität. Erreicht der Zähler Z das Stoppdecoderwort für die steigende Flanke wird in der Regel ein (Halte-) Stromvektor ausgegeben, der zu einem Diagnosestrom 0 führt. Die Decoderwörter zur Vorgabe eines neuen Stromvektors können fest verdrahtet sein, durch eine ASIC-Verdrahtungsmaske bzw. durch das sogenannte Zener-Zapping fix wählbar sein, oder flexibel durch beschreibbare Register entsprechender Zahl über eine SPI-Schnittstelle des ASIC's vom Mikrocontroller µC programmiert werden. Dies wird hier durch den Programmierblock 1 sowie die SPI-Schnittstelle SP1, die vom Mikrocontroller µC kommt, symbolisiert. Am Anschluss DIA liegen die Leitungen LA und LB des Busses beispielsweise an, wobei über die Kontakte CS das Datensignal ausgegeben wird. Für spannungsbasierte Busse wird der Puü-Up-Widerstand R1 verwendet. Zusätzlich kann vorliegend oder anstatt die Formung der Flanken dadurch erfolgen, dass die Stromquellen I1 bis I4 durch das Programmiermodul P2 eingestellt werden, wobei diese Einstellung ebenfalls fest oder programmierbar über die SPI-Schnittstelle SPI2 erfolgen kann. Wie oben angedeutet, kann dies auch durch die Beeinflussung eines zentralen Faktors erfolgen.

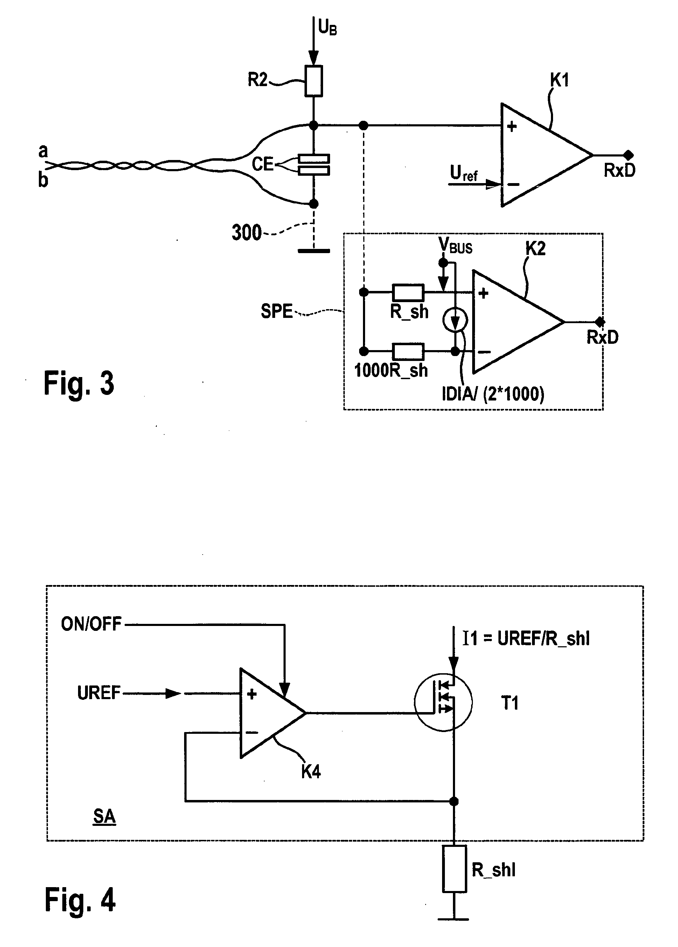

Figur 3 zeigt einen Empfänger für das Signal, dass über die Leitung Ltg a und Ltg b geführt wurde. Bei der Verwendung eines LIN-Busses wird nur eine Leitung, beispielsweise die Leitung Ltg a verwendet. Dafür ist dann Voraussetzung, dass alle Busteilnehmer auf Fahrzeugchassismasse liegen. Dies wird durch das Bezugszeichen 300 angedeutet.

Dargestellt sind Empfangskontakte CE sowie ein Pull-Up-Widerstand R2, der an die Busspannung U B angeschlossen ist. Dieser kann jedoch bei Strompegelempfängern entfallen. Üblicherweise wird die empfangene Spannung mit einer Referenzspannung UREF verglichen, um die auf der Leitung LA, LB übertragenen Signale zu detektieren. Alternativ ist es möglich, einen Strompegelempfänger SPE vorzusehen, der die Stromänderung = Dateninformation in der Busleitung detektiert. Hierzu wird der BUS - Strom, gespeist von der Bus-Versorgung UB über einen Shunt R_sh geführt. Gleichzeitig liegt die Bus-Versorgungsspannung an einem Eingang zB. (+) Seite eines Komparators Ukomp(+)=UB. Die Spannung am anderen Ende des Shunts ist UDIA=UB - IDIA*R_sh in Bezug auf Schaltungs-GND. Der zweite Eingang des Komparators zB. die (-) Seite wird durch die Highside (Pull-up-Stromquelle) mit I=(1/1000) * IDIA/2 über den Widerstand 1000*R_sh auf Ukomp(-)= UB+1000R_sh * (1/1000) * IDIA/2 = UDIA*(IDIA/2) * R_sh gehalten.

Wird kein Informationsbit auf dem BUS übertragen dh. die Stromamplitude IDIA=0, so ist UDIA=UB=UKomp(+). UKomp(-) = UB+(IDIA/2)*_sh. → RxD ist auf "0", da UKomp(-) > UKomp(+).

Wird ein Informationsbit mit der Stromamplitude IDIA ausgetauscht, so ist UDIA=UB - IDIA*R_sh, UKomp(+)=UB, UKomp(-)= UB-IDIA/2*Rsh. Dadurch kippt der Komparator nach "1" , da UKomp(-) < UKomp(+). Die Stabilität des Empfängers liegt also in der Beschaltung mit einer festen Schwelle gebildet aus der halben, zu erwartenden Stromamplitude des Informations - bits. Zur Aufnahme des Schwellenstromes (1/1000)*IDIA/2 ist eine geringfügige BUS-Last nach GND notwendig. Auch andere Stromhöhen können zur Einstellung der Schwelle verwendet werden, Shunts und BUS-Last müssen aber darauf abgestimmt werden.

Der Komparator K1 hat einen Versorgungseingang, der mit 3,3V, d.h. der Digitalversorgung beaufschlagt wird. Dies gilt auch für den Komparator K2. Optional kann die Masse 300 weggelassen werden, wenn die Komparatoren auf die Leitung Ltg. b bezogen arbeiten, beispielsweise bei einer nachgeordneten Verwendung von Optokopplern.

Figur 4 zeigt eine erste Ausführungsform der erfindungsgemäßen Stromquellen, die beispielsweise in der Anordnung gemäß Fig. 2 zum Slope Shaping verwendet werden. Dafür ist ein Stromregler vorgesehen, der als Konstantstromquelle ausgebildet ist. Die Spannungsreferenz UREF wird als sogenannte Bandgap-Spannung auf dem System ASIC SA erzeugt. Weiterhin ist ein genauer Shuntwiderstand R_SH1 vorgesehen, der einen geringen Temperaturgang aufweist. Dieser Shuntwiderstand R_SH ist extern angeschlossen, da diese Widerstände mit üblichen Mischprozessen in ASIC's nicht genau genug hergestellt werden können. Der Operationsverstärker K4 regelt den Transistor T1, der als N-Channel MOSFET ausgeführt ist so, dass die Spannung an R_SH1 gleich der Referenzspannung ist, so dass sich ein Strom IDIA = UREF/R_SH1 einstellt. Wird die aktuelle Referenzspannung durch den Ausgangsvektor (Decoderwort) gebildet zB. UREF= S0* UREF0 + S1 * UREF1 + S2 * UREF2 +3*UREF3 mit (S0,S1,S2,S3) = binäres Decoderwort (Vektor), UREF0, UREF1, UREF2, UREF3 Teile einer ASIC intern vorhandenen Bandgap Spannung Ubgap, so kann mit jedem neuen Decoderwort ein neuer Diagnosestrom IDIA vorgegeben werden. Der verwendete Vektor kann auch mehr als 4bit betragen.

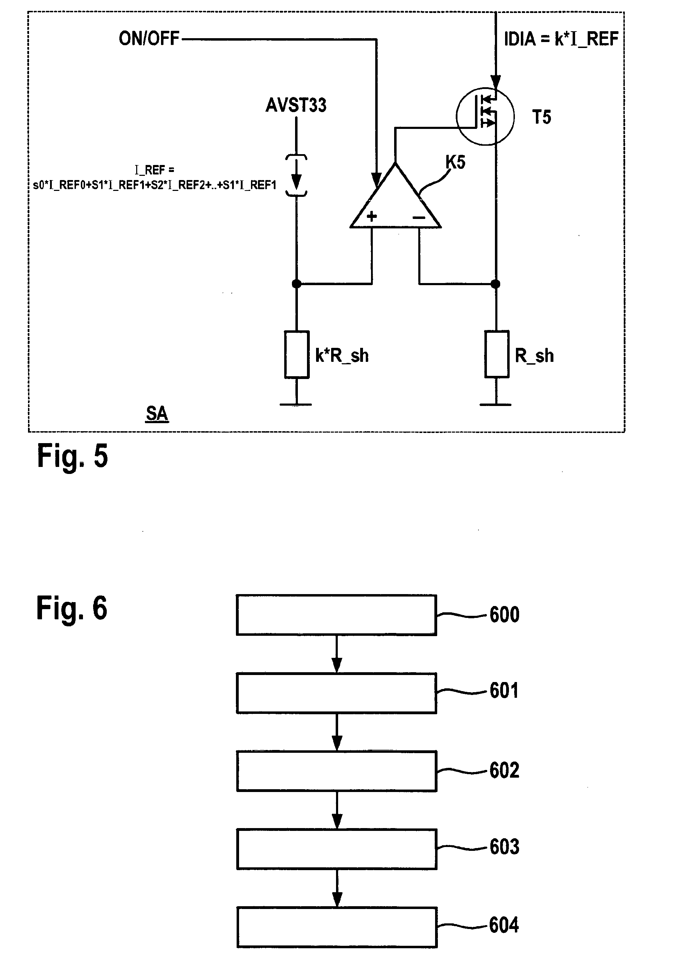

Eine weitere Ausführungsform ist in Figur 5 vorgesehen, wobei wieder eine Konstantstromquelle auf dem System ASIC SA ausgeführt ist. Diese Variante benötigt zunächst eine übliche hier nicht dargestellte ASIC-Strombank, die aus einer Spannungsreferenz UREF, die wiederum aus dem Bandgap hergestellt wird, und einem externen präzisen Widerstand abgeleitet wird. Dadurch können High-Side-Basisströme IREF0, IREF1, IREF2 bis IREFL erzeugt werden, die durch bekannte Stromspieltechnik aus der Strombank ausgekoppelt werden. Durch einen Ansteuervektor S0, S1, S2...SL kann der Summenstrom I_REF = S0 * I_REFO + S1 * I_REF1 + ... gebildet werden. Dies ist durch die Stromquelle IREF symbolisiert.

Durch Verwendung zweier angepasster Widerstände R_SH und dem vielfachen K * R_SH lässt sich ein genauer und temperaturstabiler Strom IDIA = K * I_REF erzeugen, da die Widerstände zwar ungenau sind aber relativ zueinander den nahezu konstanten Faktor K aufweisen. Dies ist ein geometrischer Größenfaktor. Dieser Faktor kann in ASIC's genau eingestellt werden, da er mit der in Halbleiterprozessen sehr guten Maskenpräzision zusammenhängt. Der Temperaturgang ist ebenfalls gut, da sich die Materialeigenschaften der gleichen Widerstandstypen nicht unterscheiden. Die beschriebene Ausführung lässt sich in ASIC's mit zentraler Stromreferenz besonders vorteilhaft zur Erzeugung des Transmitterstroms IDIA verwenden, da hierzu keine zusätzlichen externen Bauelemente oder Pins benötigt werden. Der Operationsverstärker K5 steuert dabei den Transistor T5 entsprechend an. Es ist nur ein großer Ausgangstransistor T5 notwendig, da mit dem Ansteuervektor des Decoders die Gewichte der Summe der Referenzströme für die allgemein dargestellte Quelle IREF ausgewählt wird. Dies führt zu einer günstigsten Lösung, da hierbei nur kleine Referenzstromquellen vorhanden sind und durch das Shuntwiderstandsverhältnis K der Ausgangsstrom des Diagnosetreibers gebildet wird.

Eine weitere Ausführung ist durch klassische Stromquellen als Senken vorgesehen, wobei der Stromvektor des Decoders festlegt, welche Stromsenke geschaltet wird, wie in Fig. 2 vorgesehen. Diese klassische Möglichkeit vermeidet die Nachteile der ersten Ausführung nach Fig. 4 und zwar der Verwendung eines LIN spezifischen externen Shunt-Pins, kann aber nicht so sparsam mit der Fläche des LIN-Treibers umgehen. Ebenso basierend auf der zentralen Strombank lässt sich jeder Quellenstrom IREF1 durch Stromspiegel mit entsprechenden Spiegelverhältnissen aus der Strombank erzeugen. Da diese Quellen direkt zur Bildung des Stroms IDIA verwendet werden und nicht wie in der zweiten Ausführungsform mit dem um den Faktor K reduzierten Strom gearbeitet wird, ist der Flächenbedarf größer wie in der zweiten Ausführung bei gleicher Genauigkeit.

Figur 6 zeigt ein Flussdiagramm des erfindungsgemäßen Verfahrens. In Verfahrensschritt 600 erfolgt die Erkennung, dass ein Signal zu übertragen ist, und zwar das Signal TXD. Im Verfahrensschritt 601 wird übertragen, welche Art von Flanke vorliegt, also eine steigende oder fallende. Durch die Erkennung wird dann der Zähler in Verfahrensschritt 602 gestartet und der Decoder 603 wird in Abhängigkeit vom Zählerstand Stromvektoren festlegen, um die Stromquellen entsprechend zu schalten. Damit wird dann im Verfahrensschritt 604 die entsprechend Flankenformung durchgeführt.

## Patentansprüche

1. Steuergerät (SG) zur Ansteuerung von Personenschutzmittel (PS) mit wenigstens einer Schnittstelle (IF), die ein digitales Datensignal ausgibt, **dadurch gekennzeichnet, dass** die wenigstens eine Schnittstelle (IF) eine Mehrzahl von parallelgeschalteten Stromquellen (11 bis 14) zur Beeinflussung von Signalflanken des digitalen Datensignals aufweist.

2. Steuergerät nach Anspruch 1, **dadurch gekennzeichnet, dass** für die Mehrzahl der Stromquellen (11 bis 14) eine Ansteuerung vorgesehen ist, die die Stromquellen zum vorgegebenen Zeitpunkt digital zur Beeinflussung der Signalflanken schaltet, wobei ein erster Takt für das Schalten größer als der Datentakt ist.

3. Steuergerät nach Anspruch 2, **dadurch gekennzeichnet, dass** die Schnittstelle (IF) eine Erkennungsschaltung (FE) zum Erkennen der Ausgabe des digitalen Signals einen Zähler (Z), der in Abhängigkeit von einem Erkennungssignal der Erkennungsschaltung (FE) startet und einem Decoder (DEC), der in Abhängigkeit vom Zählerstand des Schalten der Stromquellen steuert, aufweist.

4. Steuergerät nach einem der vorhergehenden Ansprüche, **dadurch gekennzeichnet, dass** die Schnittstelle (IF) vier Stromquellen (11 bis 14) aufweist.

5. Steuergerät nach einem der Ansprüche 2, 3 oder 4, **dadurch gekennzeichnet, dass** der Takt mindestens 100 Mal größer als der Datentakt ist.

6. Steuergerät nach einem der Ansprüche 1 bis 5, **dadurch gekennzeichnet, dass** eine Beeinflussungsschaltung zur Beeinflussung von jeweiligen Stromwerten der jeweiligen Stromquellen (11 bis 14) vorgesehen ist.

7. Steuergerät nach einem der vorhergehenden Ansprüche, **dadurch gekennzeichnet, dass** die wenigstens eine Schnittstelle (I F) auf einem integrierten Schaltkreis (SA) mit weiteren Steuergerätefunktionen angeordnet ist.

8. Sensor zur Ausgabe von einem unfallrelevanten Signal als einem digitalen Datensignal, **dadurch gekennzeichnet, dass** eine Schnittstelle des Sensors nach einem der Ansprüche 1 bis 7 ausgebildet ist.

9. Verfahren zur Ansteuerung von Personenschutzmitteln (PS), wobei die Personenschutzmittel in Abhängigkeit von einem digitalen Datensignal angesteuert werden, **dadurch gekennzeichnet, dass** Signalflanken des digitalen Datensignals mittels einer Mehrzahl von parallelgeschalteten Stromquellen beeinflusst werden.

10. Verfahren nach Anspruch 9, **dadurch gekennzeichnet, dass** diese Stromquellen (11 bis 14) zu vorgegebenen Zeitpunkten digital zur Beeinflussung der Signalflanken geschaltet werden, wobei ein erster Takt für das Schalten größer als der Datentakt ist.

## Claims

1. Controller (SG) for actuating personal protection means (PS) having at least one interface (IF) that outputs a digital data signal, **characterized in that** the at least one interface (IF) has a plurality of parallel-connected current sources (11 to 14) for influencing signal edges of the digital data signal.

2. Controller according to Claim 1, **characterized in that** the plurality of current sources (11 to 14) are provided with actuation that digitally switches the current sources at the prescribed time in order to influence the signal edges, wherein a first clock signal for the switching is larger than the data clock signal.

3. Controller according to Claim 2, **characterized in that** the interface (IF) has a recognition circuit (FE) for recognizing the output of the digital signal, a counter (Z) that starts on the basis of a recognition signal from the recognition circuit (FE), and a decoder (DEC) that takes the counter reading as a basis for controlling the switching of the current sources.

4. Controller according to one of the preceding claims, **characterized in that** the interface (IF) has four current sources (11 to 14).

5. Controller according to one of Claims 2, 3 and 4, **characterized in that** the clock signal is at least 100 times larger than the data clock signal.

6. Controller according to one of Claims 1 to 5, **characterized in that** an influencing circuit is provided for influencing respective current values for the respective current sources (11 to 14).

7. Controller according to one of the preceding claims, **characterized in that** the at least one interface (IF) is arranged on an integrated circuit (SA) with further controller functions.

8. Sensor for outputting an accident-related signal as a digital data signal, **characterized in that** an interface of the sensor is designed according to one of Claims 1 to 7.

9. Method for actuating personal protection means (PS), wherein the personal protection means are actuated on the basis of a digital data signal, **characterized in that** signal edges of the digital data signal are influenced by means of a plurality of parallel-connected current sources.

10. Method according to Claim 9, **characterized in that** these current sources (11 to 14) are digitally switched at prescribed times in order to influence the signal edges, wherein a first clock signal for the switching is larger than the data clock signal.

## Revendications

1. Appareil de commande (SG) destiné à commander des moyens (PS) de protection des personnes et présentant au moins une interface (IF) qui délivre un signal numérique de données,
**caractérisé en ce que**
la ou les interfaces (IF) présentent plusieurs sources de courant (11 à 14) raccordées en parallèle qui agissent sur les flancs du signal numérique de données.

2. Appareil de commande selon la revendication 1, **caractérisé en ce qu'**une commande qui raccorde les sources de courant numériquement à un instant prédéterminé pour agir sur les flancs des signaux est prévue pour les différentes sources de courant (11 à 14), la première cadence de commutation étant supérieure à la cadence des données.

3. Appareil de commande selon la revendication 2, **caractérisé en ce que** l'interface (IF) présente un circuit de détection (FE) qui détecte l'émission du signal numérique, un compteur (Z) qui est lancé en fonction du signal de détection du circuit de détection (FE) et un décodeur (DEC) qui commande le branchement des sources de courant en fonction de l'état du compteur.

4. Appareil de commande selon l'une des revendications précédentes, **caractérisé en ce que** l'interface (IF) présente quatre sources de courant (11 à 14).

5. Appareil de commande selon l'une des revendications 2, 3 ou 4, **caractérisé en ce que** la cadence est d'au moins 100 fois plus élevée que la cadence de données.

6. Appareil de commande selon l'une des revendications 1 à 5, **caractérisé en ce qu'**un circuit d'action qui agit sur les valeurs de courant de chaque source de courant (11 à 14) est prévu.

7. Appareil de commande selon l'une des revendications précédentes, **caractérisé en ce que** la ou les interfaces (IF) sont disposées sur un circuit intégré (SA) qui présente d'autres fonctions de l'appareil de commande.

8. Capteur servant à émettre un signal concernant un accident sous la forme d'un signal numérique de données, **caractérisé en ce qu'**une interface du capteur est configurée selon l'une des revendications 1 à 7.

9. Procédé de commande de moyens (PS) de protection des personnes, les moyens de protection des personnes étant commandés en fonction d'un signal numérique de données,
**caractérisé en ce que**
plusieurs sources de courant raccordées en parallèle agissent sur les flancs du signal numérique de données.

10. Procédé selon la revendication 9, **caractérisé en ce que** ces sources de courant (11 à 14) sont raccordées numériquement à des instants prédéterminés pour agir sur les flancs du signal, la première cadence de commutation étant supérieure à la cadence des données.
